# EUROPEAN PATENT APPLICATION

(11) **EP 4 191 078 A1**
(43) Date of publication of application: **07.06.2023**
(21) Application number: 21212016.6
(22) Date of filing: 02.12.2021
(51) Int. Cl.: F16B 5/00

(54) **CONNECTION SYSTEM COMPRISING A ROTATION TYPE PANEL CONNECTOR**

(71) Applicant: Hilti Aktiengesellschaft, 9494 Schaan (LI)
(72) Inventor: Schneider, Roland, 6824 Schlins (AT); Reumschuessel, Lukas, 82256 Fürstenfeldbruck (DE); Alizadeh, Michaela, 7304 Maienfeld (CH); Sanchez Lopez, Marco, 9000 St Gallen (CH)
(74) Representative: Hilti Aktiengesellschaft Corporate Intellectual Property

(57) **Abstract**

Connection system comprising a first panel (1), a first engagement pin (11) projecting from the first panel (1), a second panel (2), a second engagement pin (21) projecting from the second panel (2), and a connector (30) for connecting the first panel (1) and the second panel (2) to one another, wherein the connector (30) comprises a base (35), a first key (31) projecting from the base (35), for engaging the first engagement pin (11) by rotation of the connector (30), and a second key (32), for, simultaneously, engaging the second engagement pin (12) by rotation of the connector (30).

## Description

The invention relates to connection systems comprising rotation type panel connectors.
Figure 1 is a perspective view of a connection system in a connected state.
Figure 2 is a perspective view of the panels of the connection system of figure 1, with the panels aligned, but before connection is made and with the connector removed.
Figure 3 is a perspective bottom view of the connector of the connection system of figure 1.
Figure 4 is a perspective top view of the connector of the connection system of figure 1.
Figure 5 is a transparent top view of the connector of the connection system of figure 1.
Figure 6 is a side view of the connector of the connection system of figure 1.

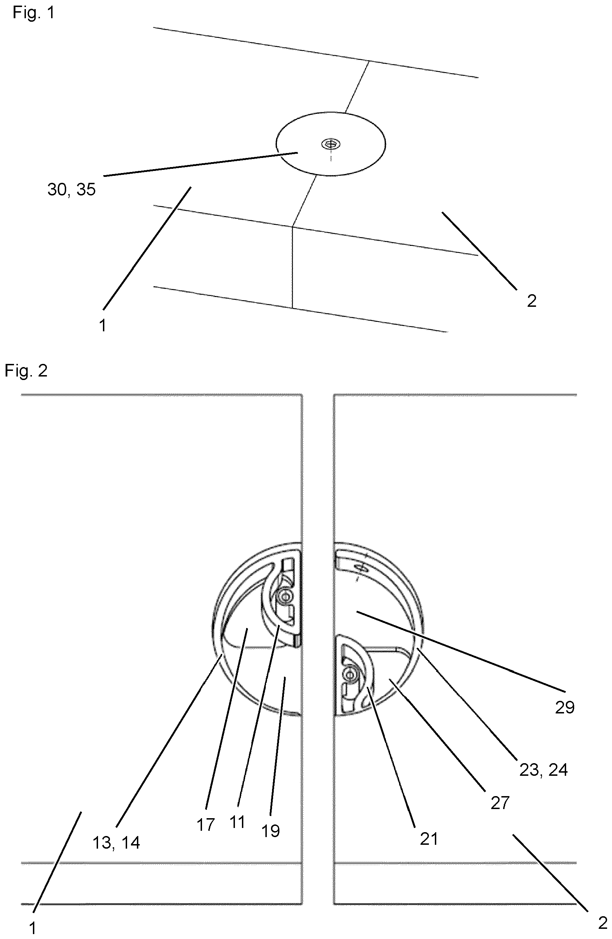

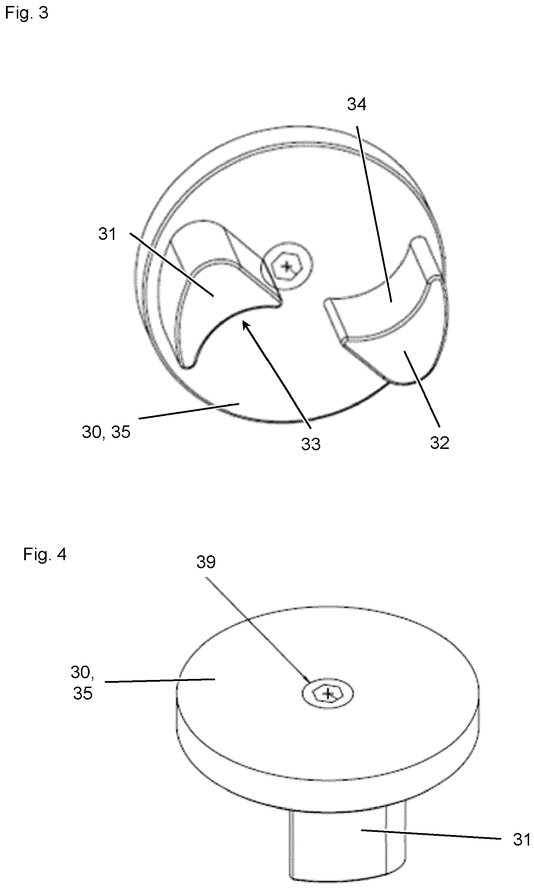

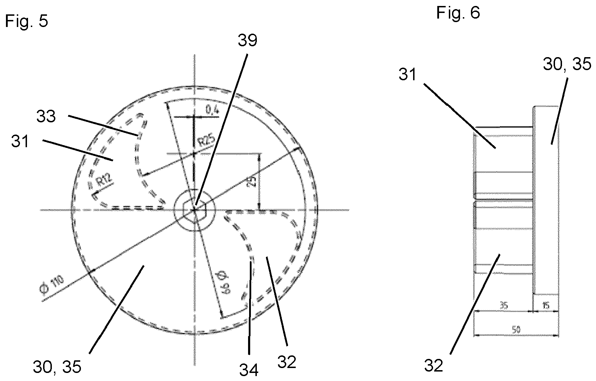

Figures 1 to 6 show a first embodiment of a connection system. The system comprises a first panel 1, in particular wood panel, a second panel 2, in particular wood panel, and a connector 30 for connecting the first panel 1 and the second panel 2 to one another.

A generally circular cylindric segment-shaped first cavity 19 is provided at an edge of the first panel 1, wherein the chord of said first cavity 19 extends along said edge. A first inlay 13 is provided within the first cavity 19. The first inlay 13 comprises an arcuate section 14, which is located adjacent to an arcuate wall of the first cavity 19 and which is connected thereto, and a tooth, which projects from the arcuate section 14, which extends along the chord of the first cavity 19, and which defines a first engagement pin 11 projecting from the first panel 1.

In analogy, a generally circular segment-shaped second cavity 29 is provided at an edge of the second panel 2, wherein the chord of said second cavity 29 extends along said edge. A second inlay 23 is provided within the second cavity 29. The second inlay 23 comprises an arcuate section 24, which is located adjacent to an arcuate wall of the second cavity 29 and which is connected thereto, and a tooth, which projects from the arcuate section 24, which extends along the chord of the second cavity 29, and which defines a second engagement pin 21 projecting from the second panel 2.

Thus, a first inlay 13 is provided in the first panel 1, wherein the first engagement pin11 is formed on the first inlay 13 and a second inlay 23 is provided in the second panel 2, wherein the second engagement pin 21 is formed on the second inlay 23.

Since the engagement pins 11, 21 are arranged within the respective cavities 19, 29, the first engagement pin 11 is sunk into the first panel 1 and the second engagement pin 21 is sunk into the second panel 2. The first engagement pin 11 is a part of the first inlay 13, and the second engagement pin 21 is a part of the second inlay 23.

The connection system further comprises a, preferably releasable, rotation type connector 30 for connecting the first panel 1 and the second panel 2 to one another, in particular by rotationally engaging the respective engagement pins 11, 21. The connector 30 comprises a base 35, which is generally circular cylindric. In particular, the base 35 is so dimensioned that in can be received and rotated within the circular cylindric segment-shaped cavities 19 and 29 when these cavities are in alignment (see figure 2).

The connector 30 further comprises a first key 31 and a second key 32, wherein both keys 31 and 32 project from the base 35, on the bottom side of the base 35 and in parallel relationship with one another.

The first key 31 has a first eccentric keying surface 33 for engaging the first engagement pin 11 and for tightening thereto when the connector 30 is rotated, and the second key 32 has a second eccentric keying surface 34 for engaging the second engagement pin 12 and for tightening thereto when the connector 30 is rotated. A drive 39 (which is shown here as an internal hex drive, by way of example only) is provided on the base 35 for connecting to a drive tool (manually or power driven) for rotationally driving the connector 30. The drive 39 opens at the top side of the base 35 for tool access, i.e. at that side of the base 35 that is located opposite the keys 31, 32. In the present embodiment, the drive 39 is formed on a sleeve socket located within the base 35.

When the first panel 1 and the second panel 2 are arranged in adjacent and parallel relationship, so that the cavities 19 and 29 are aligned with one another to give a generally cylindrically outline (as shown in figure 2), the connector 30 can be inserted, simultaneously, into both cavities 19 and 29 for rotation therein. Subsequent rotation (in the clockwise direction in the present embedment, but also counter-clockwise in other embodiments) of the connector 30 will cause the first key 31 to engage the first engagement pin 11 at the first eccentric keying surface 33 and the second key 32 to simultaneously engage the second engagement pin 12 at the second eccentric keying surface 34. In this context, the keys 31 and 32, on the one hand, and the engagement pins 11 and 12, on the other hand, are acting alike a set of levers, pulling the panels 1 and 2 together when exerting a rotational movement, until the gap joint between the panels 1 and 2 is closed. Geometry of the symmetrically arranged excentre is designed such that alignment and transfer of service loads is achieved in both parallel and perpendicular direction to the butt joint. By having two keys 31, 32 and two engagement pins 11, 12, interaction occurs in symmetric manner, at both sides of the panels 1 and 2.

Accordingly, the connection system comprises a first panel 1, a first engagement pin 11 projecting from the first panel 1, a second panel 2, a second engagement pin 21 projecting from the second panel 2, and a connector 30 for connecting the first panel 1 and the second panel 2 to one another, wherein the connector 30 comprises a base 35, a first key 31 projecting from the base 35, for engaging the first engagement pin 11 by rotation of the connector 30, and a second key 32, for, simultaneously, engaging the second engagement pin 12 by rotation of the connector 30.

The interconnection provided by the two keys 31, 32 and the two engagement pins 11, 12 can be designed so that defined displacement or "collapsing" can be allowed in case of high loads. This may be favorable in seismic conditions when a certain ductility or ability to accept some deformation of the connection could be required.

Once the rotational movement of the connector 30 has closed the gap, the connector 30 needs usually to be secured in order to avoid re-opening of the connection (e.g. due to tensile or shear loads). For this purpose, in the shown embodiment, a first pocket 17 is provided within the first panel 1 for receiving the first key 31 so as to rotationally lock the connector 30, and a second pocket 27 is provided within the second panel 2 for receiving the second key 32 so as to rotationally lock the connector 30.

The first pocket 17 is provided at the bottom of the first cavity 19, whereas the second pocket 27 is provided at the bottom of the second cavity 29. Accordingly, the connector 30 can be pushed axially (with respect to the axis of intended rotation of the connector 30) when a connector position that locks the panels 1 and 2 is reached, so that the keys 31 and 32 are catching with the pockets 17, 27 at the bottom faces of the respective cavities 19, 29. Once this catching has been achieved, the connector 30 cannot rotate backwards (which would cause the fastening to be loosened). Preferably, the pockets 17 and 27 are so positioned that no premature locking is possible before the panels 1 and 2 are safely connected. In particular, the pockets 17 and 27 can have an outline each that is an imprint of the respective key 31 or 32 to be received. Other pocket shapes are however also feasible.

Other than with pockets 17, 27, locking of the rotational movement of the connector 30 can also be achieved by other means or/and geometrical features that provide catch. In particular, the cavities 19, 29 and/or the empty space surrounding the keys 31 and/or 32 could be filled, following installation of the connector 30, with a material (such as foam) that provides either elastic behavior (acting like a spring) and/or dissipating behavior (acting like a damping element), in particular to provide locking.

In the present embodiment, the engagement pins 11, 12 are provided on the respective inlays 13, 23 (wherein the inlays can e.g. be made of metal, e.g. aluminum or steel, plastic, elastomer or wood materials). However, the engagement pins 11, 12 could also be monolithically formed on the respective panels 1, 2. Accordingly, the contour of engagement pins 11, 12 can be either machined into the respective panels 1, 2, or the engagement pins 11, 12 can be provided by separate inlays 13, 23, as shown, which might be beneficial in view of manufacturing.

The connector 30 can be monolithic or non-monolithic. Preferably, it comprises components made of wood material, including, but not exclusive, veneer plywood made of birch or beech, CLT (cross laminated timber), GLULAM (glued laminated timber), hard or soft solid timber, molded and/or compressed parts (comprising wooden flakes or chips and organic binder such as glue). The connector can also comprise components of metal (e.g. extruded aluminum), ceramics, mineral material (e.g. concrete), plastic or elastomer.

At least one of the panels 1 and/or 2, preferably both, can be wood panels.

## Claims

1. Connection system comprising
a first panel (1), a first engagement pin (11) projecting from the first panel (1), a second panel (2), a second engagement pin (21) projecting from the second panel (2), and a connector (30) for connecting the first panel (1) and the second panel (2) to one another, wherein the connector (30) comprises a base (35), a first key (31) projecting from the base (35), for engaging the first engagement pin (11) by rotation of the connector (30), and a second key (32), for, simultaneously, engaging the second engagement pin (12) by rotation of the connector (30).

2. System according to claim 1,
**characterized in that**
the first engagement pin (11) is sunk into the first panel (1) and the second engagement pin (21) is sunk into the second panel (2).

3. System according to any of the preceding claims,
**characterized in that**
a first inlay (13) is provided in the first panel (1), wherein the first engagement pin (11) is formed on the first inlay (13) and/or
a second inlay (23) is provided in the second panel (2), wherein the second engagement pin (21) is formed on the second inlay (23).

4. System according to any of the preceding claims,
**characterized in that**
a first pocket (17) is provided within the first panel (1) for receiving the first key (31) so as to rotationally lock the connector (30), and/or
a second pocket (27) is provided within the second panel (2) for receiving the second key (32) so as to rotationally lock the connector (30).
